# EUROPÄISCHE PATENTSCHRIFT

(11) **EP 3 922 909 B1**
(45) Veröffentlichungstag und Bekanntmachung des Hinweises auf die Patenterteilung: **30.08.2023**
(21) Anmeldenummer: 21187742.8
(22) Anmeldetag: 22.07.2014
(51) Int. Cl.: F21V 17/16, F21V 19/00, F16B 13/00, F16B 5/06, F21V 3/00, F21Y 103/10, F21Y 115/10

(54) **LED-BAUGRUPPE MIT NIEDERHALTERN**
LED ASSEMBLY WITH HOLD-DOWN DEVICES
ENSEMBLE DEL AVEC DES SERRE-FLANS

(30) Priorität: 26.07.2013 DE 102013214620; 28.02.2014 DE 202014100922 U
(43) Veröffentlichungstag der Anmeldung: 15.12.2021
(62) Teilanmeldung aus: 14741639.0
(73) Patentinhaber: Trilux GmbH & Co. KG, 59759 Arnsberg (DE)
(72) Erfinder: Drees, Frank, 58840 Plettenberg (DE); Goeke, Thomas, 58710 Menden (DE); Decker, Frank, 59759 Arnsberg (DE)
(74) Vertreter: Lippert Stachow Patentanwälte Rechtsanwälte

(56) Entgegenhaltungen:
- EP-A2- 2 489 931
- DE-U1-202012 001 835
- JP-A- S59 134 011
- JP-A- 2010 003 683
- US-A1- 2009 207 617
- US-A1- 2013 044 475

## Beschreibung

Die Erfindung betrifft eine LED-Baugruppe umfassend eine LED-Platine mit mehreren in Einbaulage darauf fixierten und beabstandet zueinander angeordneten Niederhaltern, die in Einbaulage mittels eines Befestigungsmittels, an einem Fügepartner, z. B. einem Leuchtengehäuse oder einem Geräteträger, befestigt sind und mit einer Niederhaltefläche versehen sind, welche aufgrund einer durch das Befestigungsmittel in Einbaulage aufgebrachten Anpresskraft die LED-Platine in Einbaulage gegen den Fügepartner presst. Ein solcher Niederhalter drückt z. B. die LED-Platine mit der Niederhaltefläche auf einen Geräteträger oder ein Leuchtengehäuse zur Verwirklichung der notwendigen Kühlleistung für die LED-Platine, indem diese auf die größere Fläche des Fügepartners angepresst wird. Die LED-Baugruppe umfasst ferner eine die LED-Platine in Einbaulage überbrückenden Optik.

### Stand der Technik

Ein derartiger Niederhalter aus dem Hause der Anmelderin ist z. B. aus der DE 10 2009 043 760 mit dem Titel "Befestigungselement für plattenförmige Bauteile aneinander, insbesondere für eine LED-Platine an einem Kühlkörper" bekannt.

### Nachteile am Stand der Technik

Der in einer Leuchte verfügbare Bauraum ist beschränkt und wird durch Miniaturisierung und Verwendung von LED-Platinen immer kleiner. Dabei stellen bestehende Niederhalter relativ große und schwere in moderne filigrane Leuchten zu integrierende Bauteile dar.

JP 2010 003683 A offenbart eine als LED-Baugruppe ausgebildete Leuchte mit einer U-förmigen Optik, deren längs verlaufenden Ränder innenseitig mit einer Nut versehen sind, welche die Längsränder einer LED-Platine aufnehmen. Das Dokument US 2013/0044475 A1 offenbart eine als LED-Baugruppe ausgebildete Leuchte, die jedoch keinen Niederhalter im Sinne der Erfindung aufweist und im Übrigen eine einheitliche und effiziente Lichtverteilung anstrebt. EP 2 489 931 A2 offenbart eine Leuchte für die Verwendung im Außenbereich. Die Leuchte ist mit einer rechteckig oder quadratisch ausgebildeten und oberseitig angebrachten Optik versehen. Die Zielsetzung der durch dieses Dokument vermittelten Lehre besteht darin, die Leuchte wasserdicht auszubilden, um das Eindringen von Regenwasser zu verhindern.

### Aufgabe

Ausgehend von dem eingangs genannten Stand der Technik befasst sich die Erfindung mit dem technischen Problem (Aufgabe), die eingangs genannten Nachteile zumindest teilweise zu vermeiden und insbesondere die Funktionalität der Niederhalter so zu erweitern, dass diese in modernen Leuchtenkonzepten integrierbar sind.

### Technische Lösung / Erfindung

Erfindungsgemäß wird diese Aufgabe durch die Ausgestaltung einer LED-Baugruppe gemäß Anspruch 1 gelöst.

Deren Niederhalter erfüllen somit nicht mehr nur noch die Anpress- oder Niederhalte-Funktion für die Platine, sondern können aufgrund der Fixiermittel zusätzlich weitere Funktionen in der Leuchte übernehmen, was mit einer Reduzierung des erforderlichen Bauraums und eine Bauteilereduzierung einhergeht, insbesondere Fixierfunktionen. Ferner können die Bauteile völlig unabhängig von dem Niederhalter befestigt und wieder gelöst werden, die Niederhaltefläche muss also nicht gelöst werden. Insofern ist das erfindungsgemäße Konzept besonders flexibel und eignet sich besonders gut für moderne filigrane Leuchten mit reduziertem Bauraum, insbesondere geringer Bauhöhe.

Die Fixiermittel sind vorzugsweise angepasst an die jeweilige Einbausituation und/oder das zu fixierende Klemmbauteil ausgebildet, um eine einfache und bauteiloptimierte Montage bzw. Demontage einzelner Klemmbauteile unter gleichzeitiger Bauraumoptimierung zu gewährleisten.

Vorzugsweise umfassen die Fixiermittel Fixierelemente zum Fixieren von unterschiedlichen Klemmbauteilen, insbesondere von Optiken. Für die Optimierung der bauteiloptimierten Montage liegt es im Rahmen der Erfindung, die unterschiedlichen Fixierelemente mit unterschiedlichen physikalischen Eigenschaften auszubilden, z. B. mit unterschiedlicher Steifigkeit bzw. Elastizität. Ferner ist es zweckmäßig, dass die Richtung der Anpresskraft für die Befestigung der Klemmbauteile unterschiedlich ist von der Hauptanpressrichtung der Niederhaltefläche zur Anpressung der unterliegenden Platine. Als besonders vorteilhaft haben sich Klemmkraftrichtungen quer zur Hauptanpressrichtung erwiesen.

Die Fixierelemente können z. B. Primärfixierelemente auf einer ersten Seite des Niederhalters zum Fixieren eines ersten Bauteils, z. B. eine Primärklemmfläche für die Befestigung einer Primäroptik, und Sekundärfixierelemente auf einer zweiten Seite des Niederhalters, z. B. einer Sekundärklemmfläche, zum Fixieren eines zweiten Bauteils, z. B. einer Sekundäroptik, umfassen.

Vorzugsweise ist das Primärfixierelement an der in Einbaulage inneren Längskante und das Sekundärfixierelement an der in Einbaulage angeordneten Außenkante vorgesehen. Die Fixierelemente können einheitlich oder unterschiedlich ausgebildet sein; sie können z. B. einheitlich oder unterschiedliche Federeigenschaften aufweisen sowie einheitliche und mehrteilige Anlageflächen. Vorzugsweise umfasst das Primärfixierelement eine einteilig, also durchgängige elastische Anlagefläche mit einer ersten Elastizität und das Sekundärfixierelement ist mehrteilig ausgebildet, mit zwei voneinander getrennten elastischen Anlageflächen, die auch eine von der ersten Elastizität unterschiedliche zweite Elastizität aufweisen können.

Zur genaueren Befestigung und/oder zur Lagefixierung können die Anlageflächen bzw. -kanten der Fixierelemente Rastmittel umfassen, welche in Einbaulage mit den komplementär ausgebildeten Bauteilen lagefixierend zusammenwirken, vorzugsweise durch gegenseitiges Hintergreifen, insbesondere einrastendes Hintergreifen.

Um eine Befestigung der Bauteile unabhängig von dem Niederhalter zu ermöglichen, den Niederhalter für das Befestigen und Lösen der Bauteile also nicht lösen zu müssen, erstrecken sich die Anlageflächen bzw. Anlagekanten der Fixierelemente vorzugsweise in einer von der Niederhaltefläche unterschiedlichen Ebene. Die bevorzugte Ausbildung sieht z. B. einen Niederhalter vor, der mit einer Unterseite die Niederhaltefläche definiert und wobei sich die Klemmflächen der Fixierelemente quer zu dieser Niederhaltefläche erstrecken. Wenn die Niederhaltefläche und die Fügeflächen in unterschiedlichen Ebenen wirken bzw. liegen, können die Fügeflächen auch unterschiedlich groß, aber auch gleich groß ausgebildet sein.

Bei einer bevorzugten Ausführungsform umfasst die Niederhaltefläche eine Größe von ca. 104 Quadratmillimetern, eine in Einbaulage den LEDs der LED-Leiste zugewandte Innenanlagefläche eine Größe von ca. 150 Quadratmillimetern und eine in Einbaulage von den LEDs abgewandte Außenanlagefläche eine Größe von ca. 125 Quadratmillimetern. Das Verhältnis der Anlageflächen zur Niederhaltefläche liegt also zwischen 1,2 und 1,5. Vorzugsweise ist die Außenanlagefläche gebildet durch drei Einzelflächen, von denen die zwei äußeren eine höhere Elastizität aufweisen als eine Dritte, zwischen den beiden äußeren Anlageflächen angeordnete Anlagefläche, die vorzugsweise nahezu starr ausgebildet ist.

Vorzugsweise sind die Bauteile als Klemmbauteile ausgebildet, so dass die Fixiermittel komplementär zu diesen Klemmbauteilen ausgebildet sind, also in Einbaulage eine klemmende und lagefixierende Verbindung realisieren. Besonders einfache Montagen und und/oder Wartungen sind durch die Ausbildung als werkzeuglose Rastverbindungen realisierbar.

Eine besonders passgenaue Montage wird durch Anordnung der Fixiermittel an den Längsseiten eines länglichen Niederhalters erzielt, weil somit bei einem Transport der Niederhalter ausgerichtet hintereinander koaxial in Längsrichtung in einem automatisierten Transportsystem kein Einfluss auf die angrenzenden Niederhalter und somit die Toleranzen bzw. Toleranzketten hat. Oder anders ausgedrückt: Die Niederhalter liegen immer unmittelbar ohne ein evtl. elastisches Spiel der Fixiermittel aneinander an. Durch diese Ausgestaltung werden negative Auswirkungen für die Toleranzketten durch die Niederhalter selbst weitestgehend ausgeschaltet. Diese Ausbildung ist insbesondere für die automatisierte Fertigung von Vorteil, weil sich die Niederhalter im Rahmen einer automatisierten Montage immer an genau definierten Punkten befinden und somit von einem Verdrahtungsroboter nicht beschädigt werden.

Die bevorzugte Ausbildung des Niederhalters umfasst ferner mindestens ein Positioniermittel zur Gewährleistung einer ortsgenauen Positionierung des Niederhalters auf dem Klemmbauteil und/oder dem Fügepartner, wobei es wieder im Rahmen der Erfindung liegt, mehrere verschiedene Positioniermittel für unterschiedliche Bauteile und deren Lagepositionierung im Verhältnis zueinander vorzusehen. Die Positioniermittel können so ausgebildet sein, dass diese in Einbaulage mit dem jeweiligen Gegenpart zusammenarbeiten, z. B. durch Hintergreifen von Hinterschnitten durch eine korrespondierend zu diesen Hinterschnitten fungierendes Rastmittel, an dem jeweils anderen Bauelement, wobei die Befestigung werkzeuglos oder unter Einsatz von Werkzeugen erfolgen kann.

Diese Positioniermittel zur korrekten Anordnung des Niederhalters in Einbaulage dienen ferner als Mittel zur Lagekennzeichnung beim Transport des Niederhalters in einem automatisierten Transportsystem, z. B. beim Transport in einem Rüttler. Das automatisierte Transportsystem kann z. B. einen Anschlag umfassen, gegen den der Niederhalter bei falsch ausgerichteter Lage aufläuft und aussortiert wird. Damit kann die Ausrichtung in einer ersten Hauptrichtung, z. B. die korrekte Ausrichtung in der Horizontalen sichergestellt werden. Sodann muss noch die korrekte Ausrichtung des Niederhalters in der anderen Hauptlage, z. B. der Vertikalen bzw. rechts/links gewährleistet werden. Dieses kann auf besonders einfache Weise durch asymmetrische Anordnung der Positioniermittel entlang der Längsachse des Niederhalters realisiert werden, so dass der Niederhalter nur bei korrekter Anordnung des längeren Abschnitts auf einer Auflage der Zuführungseinheit liegen bleibt und bei einer falschen Anordnung durch das Eigengewicht herunterfällt.

Neben den Fixiermitteln können zwischen dem Niederhalter und dem Klemmbauteil ferner korrespondierend ausgebildete bzw. wirkende Lagefixiermittel ausgebildet sein, z. B. in Form von sich gegenseitig in Einbaulage hintergreifenden oder ineinandergreifenden Positionierungsrippen, wobei deren geometrische Ausgestaltung bauraumoptimiert an die jeweilige Einbausituation angepasst ist, um eine passgenaue und permanente Lagefixierung der Bauteile im Verhältnis zu einander zu gewährleisten.

Ein omnipräsentes Problem bei der automatisierten Fertigung unter Verwendung von Robotern sind Toleranzen bzw. Toleranzketten, also das Zusammenspiel von zu verbindenden Bauteilen und deren genaue Positionierung an einer gewünschten Sollposition, weil eine ungenaue Positionierung dazu führen kann, dass ein Automat oder Roboter ein Bauteil, z. B. eine Anschlussklemme beschädigt oder abschert. Die Positioniermittel durchdringen vorzugsweise das Klemmbauteil und werden dann in dem Fügepartner entweder lösbar oder unlösbar fixiert. Hierzu weist der Fügepartner vorzugsweise ein definiertes Lochbild zur Positionierung des Niederhalters in der genauen Sollposition auf. Die Niederhalter können z. B. Zentrierstifte umfassen, welche das als LED-Platine ausgebildete Klemmbauteil durchdringen und dieses mit dem Geräteträger oder dem Leuchtengehäuse lagegenau verbinden.

Vorzugsweise sind die Niederhalter jeweils als Linearelement ausgebildet, welches eine größere Länge als Breite aufweist und somit auch eine Flächenpressung in der Länge realisiert.

Die Klemmbauteile sind vorzugsweise ausgebildet als Optikelemente bzw. Optiken, beim Einsatz von mehreren Optiken werden diese dann als Primäroptik und Sekundäroptik usw. bezeichnet.

Bei der bevorzugten Ausführungsform weisen die Fixiermittel des Niederhalters erste Fixierelemente zur Fixierung einer Primäroptik und zweite Fixierelemente zur Fixierung einer Sekundäroptik auf. Bei der bevorzugten Weiterentwicklung umfassen die ersten und zweiten Fixierelemente zusätzlich unterschiedliche Federeigenschaften, wobei diese Federeigenschaften auch durch entsprechende Ausbildung der Fixierelemente bzw. Gegenmittel an den Gegenpart, also an der Optik oder dergleichen realisiert sein können.

Eine LED-Baugruppe umfassend mehrere Niederhalter kann eine als Abdeckoptik ausgebildete Optik aufweisen, wobei die Abdeckoptik senkrecht zur Längsrichtung einen U-förmigen Querschnitt aufweisen kann. Dabei können im Bereich der beiden freien Enden die Seitenschenkel der U-Form jeweils eine nach außen verlaufende Ausbuchtung umfassen zur Gestaltung einer als Anlage wirkende Absatzfläche für die als außenliegende Rastnasen ausgebildeten zweiten Fixierelemente des Niederhalters. Um eventuelle Längenänderungen bei auftretenden Temperaturschwankungen zu kompensieren ohne dass sich zerstörerische Spannungen in der Abdeckoptik entwickeln, kann die Befestigung der Abdeckoptik an den Niederhaltern so realisiert sein, dass sich in Einbaulage der Abdeckoptik eine rein kraftschlüssige Verbindung zwischen Abdeckoptik und Niederhaltern einstellt.

Die Niederhalter können aus allen geeigneten und an die Einbausituation angepassten Materialien gefertigt sein, auch Zusammensetzungen derselben. Die Niederhalter können z. B. als einstückiger Kunststoffkörper ausgebildet oder aus einem Kunststoffkörper mit einer integrierten Metallfeder ausgebildet sein, z. B. zum Unterstützen der elastischen Haltefähigkeiten des Kunststoffs. Die Metallfeder kann dabei vollständig innen liegend in dem Kunststoff oder nur teilweise innen liegend ausgebildet sein durch entsprechende Umspritzung der Metallfeder mit Kunststoff. Bei einer anderen Ausführungsform werden die erforderlichen Kräfte nur durch Wahl geeigneter Kunststoffe für die Fertigung des jeweiligen Niederhalters erzielt, z. B. durch Verwendung faserverstärkter Kunststoffe, wobei auch ein 2-K-Verfahren eingesetzt werden kann, um die Bereiche mit unterschiedlichen Federeigenschaften und/oder unterschiedlicher Festigkeit an dem Niederhalter auszubilden. Als besonders vorteilhaft hat sich die Verwendung eines glasfaserverstärkten Thermoplasts, aber auch die Verwendung von PBT (Polybutylenterephthalat) herausgestellt, weil diese Materialien eine hohe Kriechbeständigkeit aufweisen und gleichzeitig dauerhaft die bei der Montage auftretenden Druck- und/oder Biegekräfte aufnehmen bzw. den auftretenden Kräften dauerhaft standhalten können.

Durch die Auswahl der geeigneten Materialien können die Niederhalter auch als besonders flaches Bauteil mit einer Bauhöhe unter 7 Millimetern ausgebildet sein, um die neuen Rahmenbedingungen in beengten Bauräumen realisieren bzw. erfüllen zu können.

Ein weiterer Aspekt der Erfindung umfasst die Integration von Anschlussklemmen für die Leuchte in den Niederhaltern. Dabei können diese Anschlussklemmen gleichzeitig die federnden Eigenschaften unterstützen bzw. realisieren und die elektrischen Übertragungsmittel darstellen. Z. B. können diese Anschlussklemmen als Rastnasen ausgebildet sein, welche auf den Eingriffsflächen der Fixierelemente abstehen, um mit dem jeweiligen Gegenpart mittels der integrierten Anschlussklemme die für den Anwendungsfall erforderliche elektrische Verbindung zu realisieren.

Eine bevorzugte Weiterentwicklung sieht vor, dass die Niederhalter ferner oder alternativ einen Kommunikationsanschluss aufweisen, z. B. einen BUS-Anschluss zur Verwirklichung der zunehmend auftretenden Kommunikationsaufgaben bei der Einbindung von Leuchten in intelligente Leuchtenkonzepte.

Weitere Einzelheiten, Vorteile und Merkmale der Erfindung lassen sich dem nachfolgenden Teil der Beschreibung entnehmen, in dem ein Ausführungsbeispiel der erfindungsgemäßen Vorrichtung an Hand von drei Zeichnungen näher erläutert wird. Es zeigen:
- Figur 1A: eine perspektivische Draufsicht auf die obere Außenseite eines Niederhalters einer bevorzugten Ausführungsform einer erfindungsgemäßen LED-Baugruppe;
- Figur 1B: eine perspektivische Draufsicht auf die obere Innenseite des Niederhalters gemäß Figur 1A;
- Figur 1C: eine perspektivische Draufsicht auf die untere Außenseite des Niederhalters gemäß Figur 1A;
- Figur 2: eine perspektivische Ansicht einer erfindungsgemäßen LED-Baugruppe mit einer auf einer LED-Platine fixierten Primäroptik unter Verwendung des Niederhalters in Einbaulage;

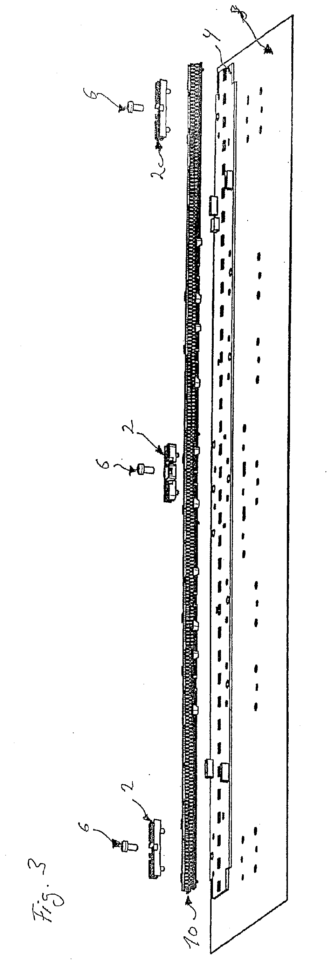

- Figur 3: eine Explosionsdarstellung der LED-Baugruppe gemäß Figur 2;
- Figur 4: die LED-Baugruppe mit gelöster Primäroptik und befestigten Niederhaltern;

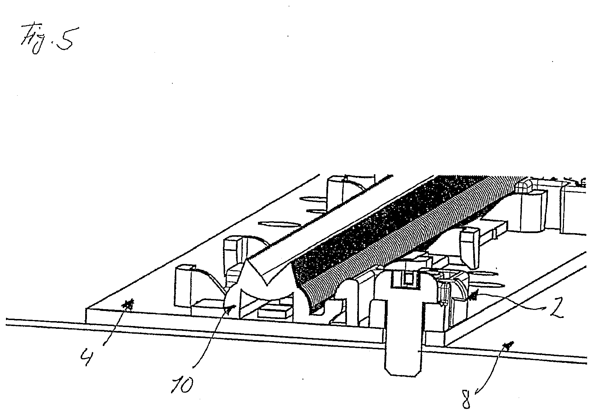

- Figur 5: einen vergrößerten Querschnitt durch die LED-Baugruppe gemäß Figur 2 entlang der Linie V-V;
- Figur 6: eine vergrößerte perspektivische Ansicht der LEDBaugruppe gemäß Figur 2 bei angehobener Primäroptik;
- Figur 7: eine vergrößerte Draufsicht auf das vordere Ende der LED-Baugruppe gemäß Figur 2 zur Verdeutlichung der zwischen dem Niederhalter und dem Primäroptik ausgebildeten Lagefixierungsmittel;

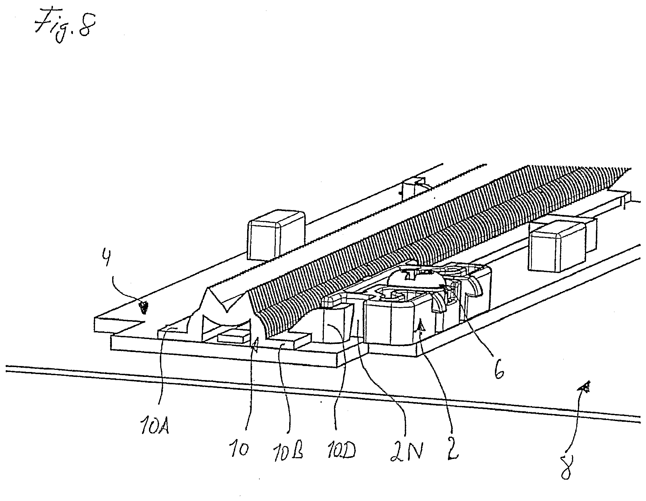

- Figur 8: eine vergrößerte perspektivische Frontansicht der mit dem Niederhalter verbundenen Primäroptik und der zwischen diesen wirkenden Lagefixierungsmittel;
- Figur 9A: eine Draufsicht einer ersten Anordnungsvariante der Niederhalter zur Befestigung der Primäroptik;
- Figur 9B: eine zweite Anordnungsvariante des Niederhalters zur Befestigung der Primäroptik;
- Figur 10: eine perspektivische Ansicht einer auf die LED-Baugruppe aufgesetzten Sekundäroptik in Einbaulage;
- Figur 11: eine perspektivische Ansicht der LED-Baugruppe bei angehobener Sekundäroptik;
- Figur 12: einen vergrößerten Querschnitt entlang der Linie XII - XII gemäß Figur 10;
- Figur 13: eine Draufsicht des vorderen Abschnitts der LED-Baugruppe gemäß Figur 12 zur Verdeutlichung der zwischen der Sekundäroptik und dem Niederhalter wirkenden Lagefixierungsmittel;
- Figur 14: eine perspektivische Frontansicht des vorderen Abschnitts gemäß Figur 13, aber ohne Primäroptik;
- Figur 15A: eine perspektivische Draufsicht auf die obere Außenseite eines Niederhalters einer weiteren Ausführungsform einer erfindungsgemäßen LED-Baugruppe;
- Figur 15B: eine perspektivische Draufsicht auf die obere Innenseite des Niederhalters gemäß Figur 15A;
- Figur 15C: eine perspektivische Draufsicht auf die untere Außenseite des Niederhalters gemäß Figur 15A;
- Figur 16: eine Stirnseitenansicht einer Abdeckoptik zur Befestigung mit einem Niederhalter der Figur 1A oder 15A
- Figur 17: eine perspektivische Ansicht einer LED-Baugruppe mit der an eine LED-Platine fixierten Abdeckoptik nach Figur 16 unter Verwendung eines Niederhalters in Einbaulage; und
- Figur 18: eine Schnittansicht der LED-Baugruppe entlang der Linie XVIII - XVIII gemäß Figur 17.

Gleiche oder gleichwirkende Teile sind mit denselben Bezugszeichen versehen.

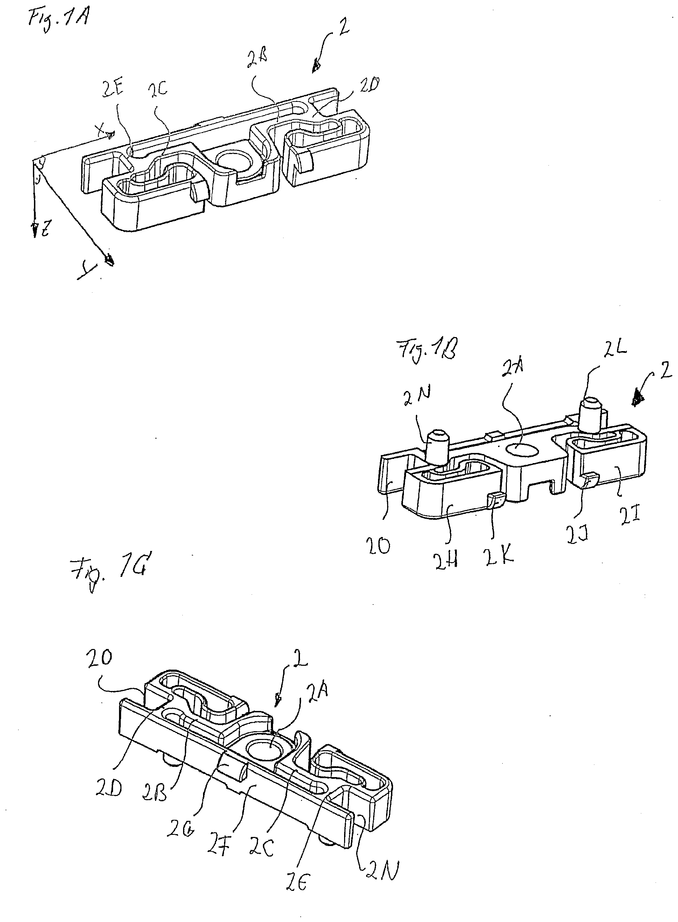

Die Figuren 1A bis 1C zeigen verschiedene Ansichten des Niederhalters 2 einer erfindungsgemäßen LED-Baugruppe. Dieser Niederhalter 2 ist im Wesentlichen als rechteckig und einstückig ausgebildetes Kunststoffspritzgussteil ausgebildet, dessen Längsrichtung sich in einem kartesischen Koordinatensystem in der X-Richtung erstreckt, dessen Querrichtung sich in Y-Richtung und dessen Höhe sich in Z-Richtung erstreckt. Die Erstreckungsrichtung in Längsrichtung entlang der X-Achse ist etwa dreimal so lang wie entlang der Querrichtung entlang der Y-Achse. Insgesamt hat der Niederhalter 2 Abmessungen von 38 Millimeter x 9 Millimeter x 5 Millimetern (LxBxH).

Dieser Niederhalter 2 weist in der Mitte eine Durchgangsöffnung 2A für eine Befestigungsschraube 6 auf. Diese Durchgangsöffnung 2A ist in der Mitte des Niederhalters 2 in einem plattenförmigen Schraubenabschnitt ausgebildet, wobei dieser vorliegend den mittleren Teil der in der X-Y-Ebene liegenden Niederhaltefläche bildet. Die Oberfläche dieses plattenförmigen Abschnitts ist zudem um etwa die Hälfte der Höhe des Niederhalters 2 gegenüber der restlichen Oberfläche des Niederhalters 2 abgesenkt ist, damit der Schraubenkopf in Einbaulage nicht über das obere Ende des Niederhalters 2 hinausragt. An diesem plattenförmigen, zentralen Schraubenabschnitt, welcher in Einbaulage mit seiner Unterseite den wesentlichen Teil der Niederhaltefläche zur Aufbringung der in Einbaulage in Z-Richtung wirkenden Hauptanpresskraft darstellt, erstrecken sich in Längsrichtung, also radial abragend von der Durchgangsöffnung 2A zwei einstückig angespritzte Längsarme 2B, 2C, die insofern ebenfalls Bestandteil der Niederhaltefläche sind. An ihren vorderen Freienden sind an diesen Längsarmen 2B, 2C jeweils T-förmig ausgebildete und insofern sich in Y-Richtung erstreckende Querarme 2D, 2E ausgebildet, die sich somit sowohl in der Y-Richtung zu einer Außenseite und entgegen der Y-Richtung zu einer Innenseite erstrecken. Einstückig angeformt an diese Querarme 2D, 2E ist an der Innenseite eine Innenklemmfläche 2F, welche sich entlang der gesamten Längsachse des Niederhalters 2 erstreckt und in der Mitte am oberen Ende etwa über die halbe Höhe erstreckend eine angeformte Innenrastnase 2G mit einer oberseitigen Auflaufkrümmung aufweist, wobei die Rastfläche dieser Innenrastnase 2G sich in Z-Richtung vom oberen Ende des Niederhalters 2 nach unten versetzt parallel zur Y-Achse etwa in der Mitte der Höhe des Niederhalters 2 erstreckt. Diese Innenklemmfläche 2F ist über die Querarme 2D, 2E von den Längsarmen 2B, 2C beabstandet und insofern in Längsrichtung elastisch ausgebildet, um die Innenrastnase 2G einfach mit dem komplementär ausgebildeten Klemmbauteil zu verbinden und von diesem lösen zu können. In der vorliegenden Ausführungsform bildet diese Innenklemmfläche 2F somit ein erstes Fixierelement des Niederhalters 2, welches in Einbaulage auf der Innenseite des Niederhalters 2 wirkt. Diese Innenklemmfläche 2F wird vorliegend eingesetzt zur Befestigung einer lichtdurchlässigen und Lichtlenkflächen aufweisenden Primäroptik 10, welche die LED-Leiste in Einbaulage brückenartig überspannt.

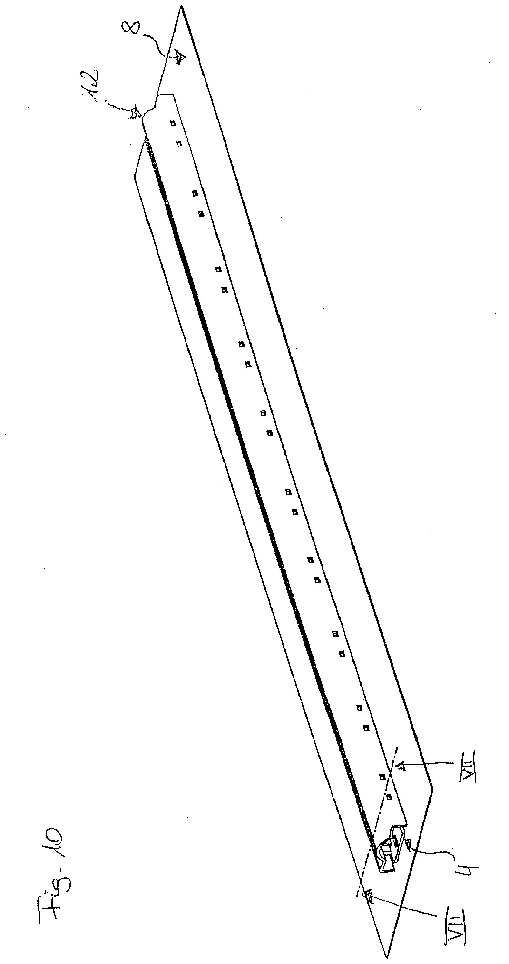

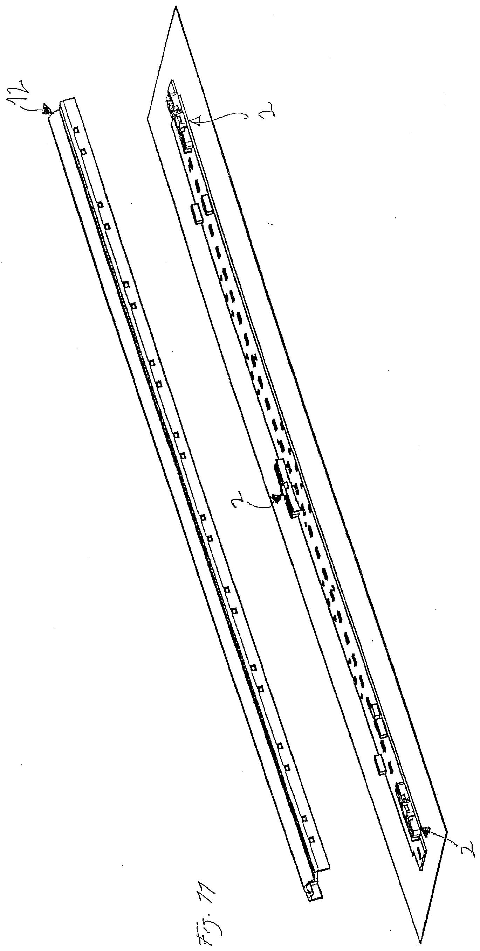

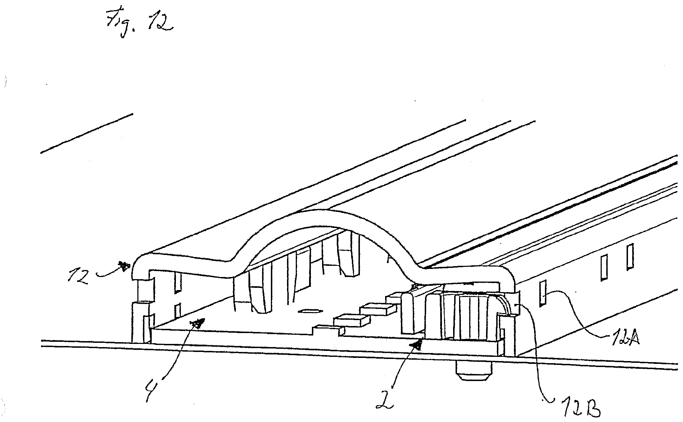

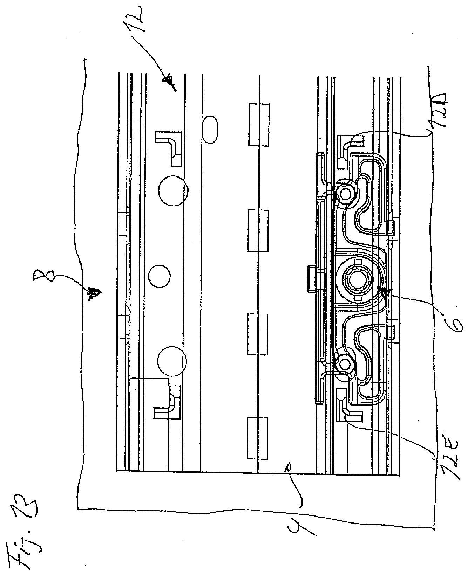

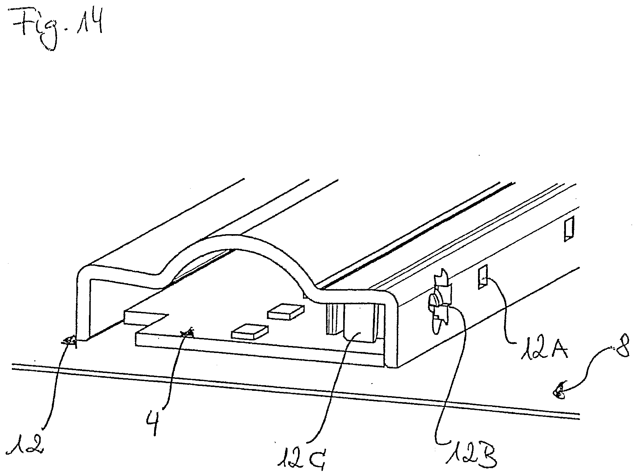

Ein zweites Fixierelement des Niederhalters 2 wird gebildet durch einstückig an den Querarmen 2D, 2E angeformte, elastische und in sich geschlossene Bogenabschnitte, die sich von den Stirnenden aufeinander zu erstrecken zur Bildung von Außenklemmflächen 2H, 21. Die Materialstärke der Innenwände dieser elastischen Bogenabschnitte ist etwa halb so dick wie die Außenklemmflächen 2H, 2I zur Erzielung der erforderlichen Elastizität und somit der der Bewerkstelligung der bauteiloptimierten und angepassten Rastkräfte zur Befestigung eines Klemmbauteils, vorliegend der die LED-Baugruppe umschließenden Sekundäroptik 12 gemäß den Figuren 10-14. Jede Außenklemmfläche 2H, 21 weist jeweils an den Außenklemmflächen 2H, 21 einstückig angeformte Außenrastnasen 2J, 2K auf, die zunächst einen sich vom oberen Ende des Niederhalters 2 erstreckende, bogenförmige Auflaufschräge umfassen und dann in eine in Z-Richtung vom oberen Ende nach unten versetzte und sich parallel zur Y-Richtung erstreckende Rastfläche übergehen.

An seiner Unterseite weist der Niederhalter 2 zwei als Stifte 2L, 2M ausgebildete und einstückig angeformte Positionierungsmittel auf, welche sich in Z-Richtung quer zu der durch die X-Y-Ebenen aufgespannten Niederhaltefläche nach unten erstrecken und mit welchen der Niederhalter 2 in Löcher der LED-Platine 4 bzw. dem Fügepartner lagefixierend einsteckbar ist. Vorzugsweise umfasst der Fügepartner ein definiertes Lochbild an definierten Sollpositionen und die LED-Platine umfasst ebenfalls ein korrespondierendes Lochbild, in welche die Positioniermittel der Niederhalter 2 lagefixierend und positionierend einsteckbar sind. In Einbaulage sind also die einzelnen Bauteile der LED-Baugruppe im Verhältnis zueinander und im Verhältnis zum Fügepartner genau positioniert und fixiert.

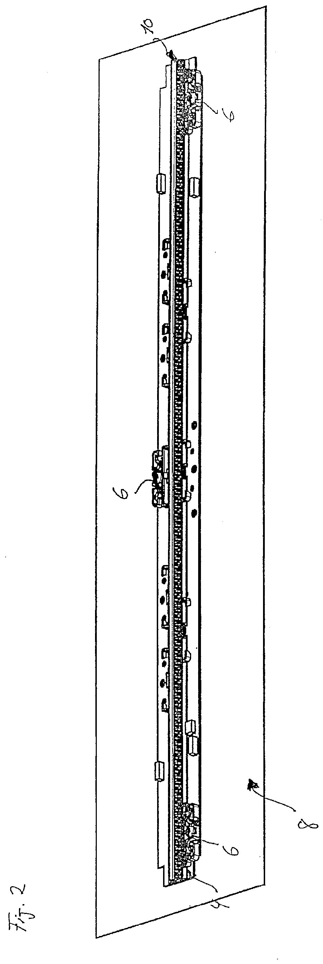

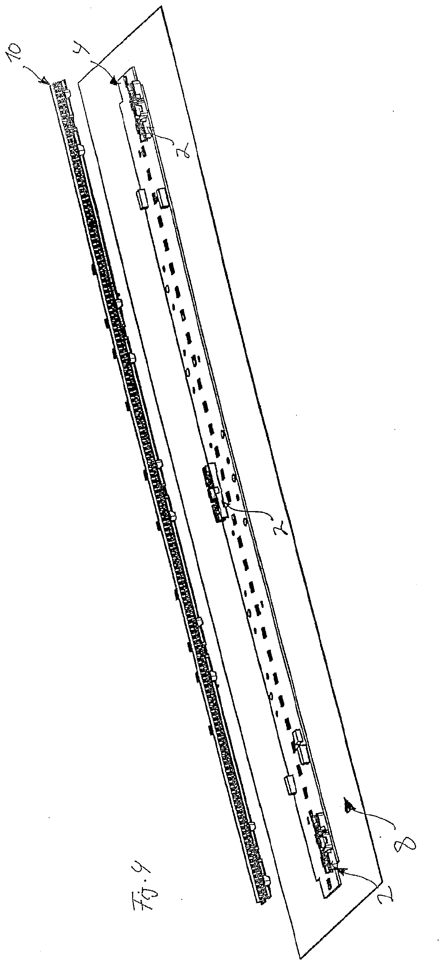

Figur 2 zeigt eine erfindungsgemäße LED-Baugruppe umfassend eine lang gestreckte LED-Platine 4, ein darunter angeordnetes Leuchtengehäuse 8 bzw. ein Geräteträger und ein durch den Niederhalter 2 auf der LED-Platine 4 lagefixierte Primäroptik 10, Bei der Montage werden zunächst die Niederhalter 2 in entsprechende Aufnahmelöcher an der LED-Platine 4 eingesteckt, welche sich versetzt nach außen auf der LED-Platine 4 parallel zur Längserstreckungsrichtung der LEDs in der Mitte der LED-Platine ausgerichtet sind. Nach dem Aufstecken der Niederhalter 2 auf die LED-Platine 4, wobei im vorliegenden Fall zwei Niederhalter 2 auf der einen Seite der Primäroptik 10 angeordnet sind und ein Niederhalter 2 in der Mitte zwischen den beiden auf der gegenüberliegenden Seite der Primäroptik 10 angeordnet ist, werden die Niederhalter 2 mittels Befestigungsschrauben 6 mit dem Leuchtengehäuse 8 verschraubt. Sodann wird gemäß Figur 4 die als einstückiges Kunststoffspritzgussteil ausgebildete Primäroptik 10 mit der LED-Platine 4 verbunden durch einfaches Aufpressen der Primäroptik 10. Dabei untergreifen Rastflächen an der Primäroptik die Innenrastnase 2G der Niederhalter 2 und liegen in Rastposition flächig unterhalb der Anlagefläche der Innenrastnasen 2G. In Einbaulage umschließt die Primäroptik somit domartig die sich in Längsrichtung erstreckenden LEDs der LED-Platine 4, wobei die Primäroptik 10 zusätzlich an den Anwendungsfall angepasste Reflexionsflächen zur Lichtlenkung aufweist.

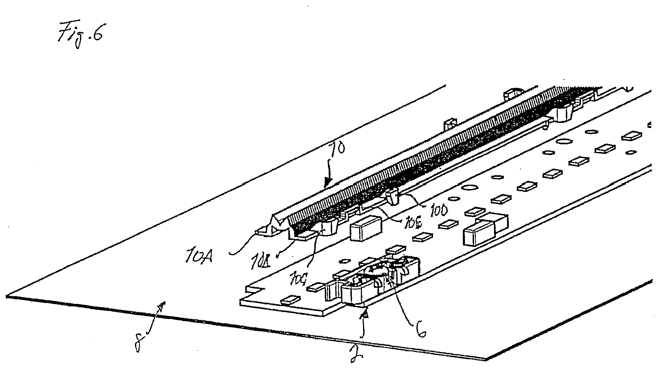

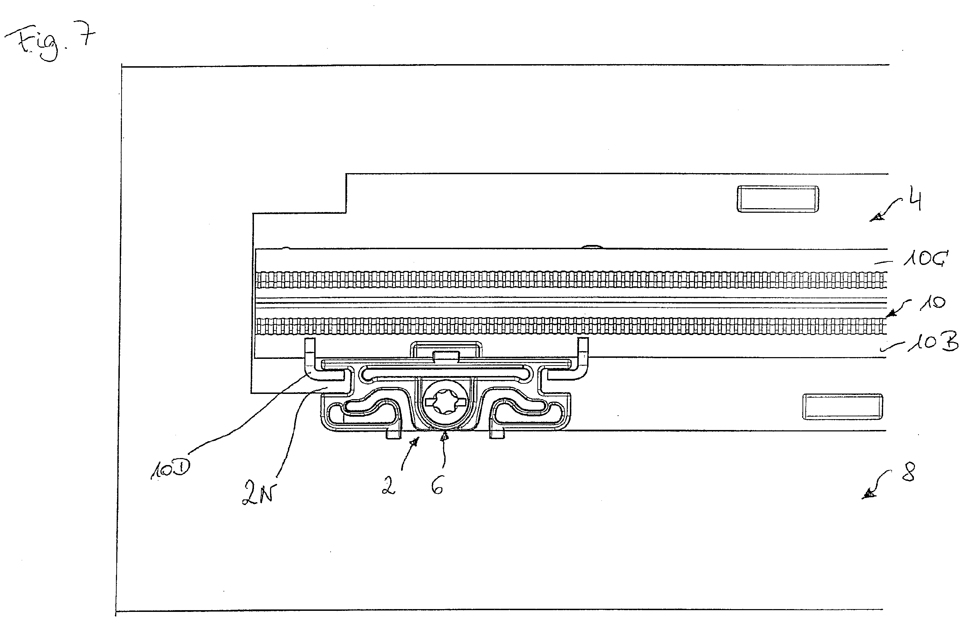

Wie insbesondere Figur 6 zeigt, weist die Primäroptik 10 an den sich in Längsrichtung erstreckenden Außenlaschen 10A, 10B jeweils komplementär zu den Niederhaltern 2 ausgebildet Eingriffhaken 10C, 10D auf, welche in Einbaulage in stirnseitige Ausnehmungen 2N, 2O des Niederhalters 2 eingreifen, so dass in Einbaulage gemäß der Darstellung in Figur 7 die Innenrastnase 2G des Niederhalters 2 auf einem Rastnasenplateau 10E aufliegt und die etwa um die Länge des Niederhalters 2 voneinander entlang der Längsachse der Primäroptik 10 beabstandeten Eingriffhaken 10C, 10D mit ihren aufeinander zu ragenden Schenkeln in die Ausnehmungen 2N, 2O des Niederhalters 2 eingreifen zur Bewerkstelligung der Lagefixierung.

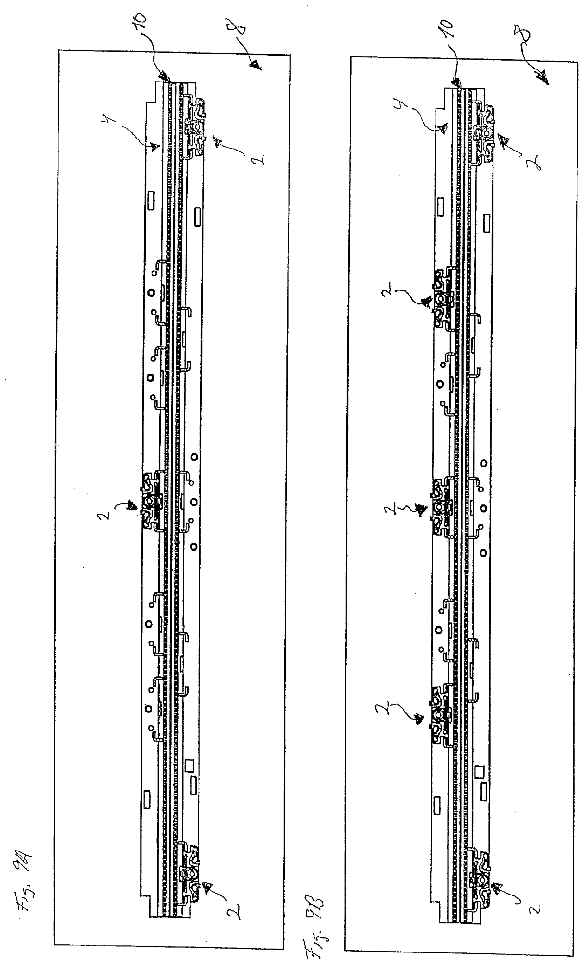

Der Einsatz von mehreren Niederhaltern gemäß der Ausführungsform in Figur 9B mit zwei Niederhaltern auf einer Seite der Primäroptik 10 und dreien auf der gegenüberliegenden Seite, verwirklicht eine bessere thermische Anbindung der LED-Leiste 4 an den Leuchtengehäuses 8.

Die Figuren 10-14 zeigen die Befestigung einer die LED-Baugruppe überdeckenden Sekundäroptik 12 mittels der Niederhalter 2. Wie aus der Figur 10 zu entnehmen ist, überbrückt die transluzente Sekundäroptik 12 die LED-Platine 4 brückenartig von Längsseite zu Längsseite und weist im mittleren Bereich eine nach oben gewölbte, domförmige Kuppel auf, unter welcher die Primäroptik 10 angeordnet ist, die jedoch in den Figuren 10 bis 14 zur besseren Darstellung nicht abgebildet ist. Die Befestigung der Sekundäroptik 12 erfolgt wiederum mittels komplementär zwischen den Niederhaltern 2 und der Sekundäroptik ausgebildeten Rastmitteln, welche in der vorliegenden Ausführungsform an den Niederhaltern 2 und zwar in diesem Fall zu den Außenrastnasen 2J, 2K an den Außenrastflächen 2H, 2I komplementär in Vertikalstegen der Sekundäroptik ausgebildeten Rastlöchern 12A, 12B, in welche die Außenrastnasen 2J, 2K rastend eingreifen. Auf der Innenseite der Sekundäroptik 12 sind als Zentrierwinkel 12C, 12D ausgebildete Lagefixierelemente vorgesehen, welche in Einbaulage lagefixierend Eingreifen in die Stirnöffnungen 2N, 2O der Niederhalter 2. Diese Zentrierwinkel 12C, 12D sitzen in Einbaulage Innenseite in den Stirnöffnungen 2N, 2O neben den Eingriffhaken 10C, 10D der Primäroptik 10, so dass die Breite der Stirnöffnungen 2N, 2O demnach so groß gewählt ist, dass Zentrierelemente von sowohl der Primäroptik 10 als auch der Sekundäroptik 12 in diesen aufnehmbar sind.

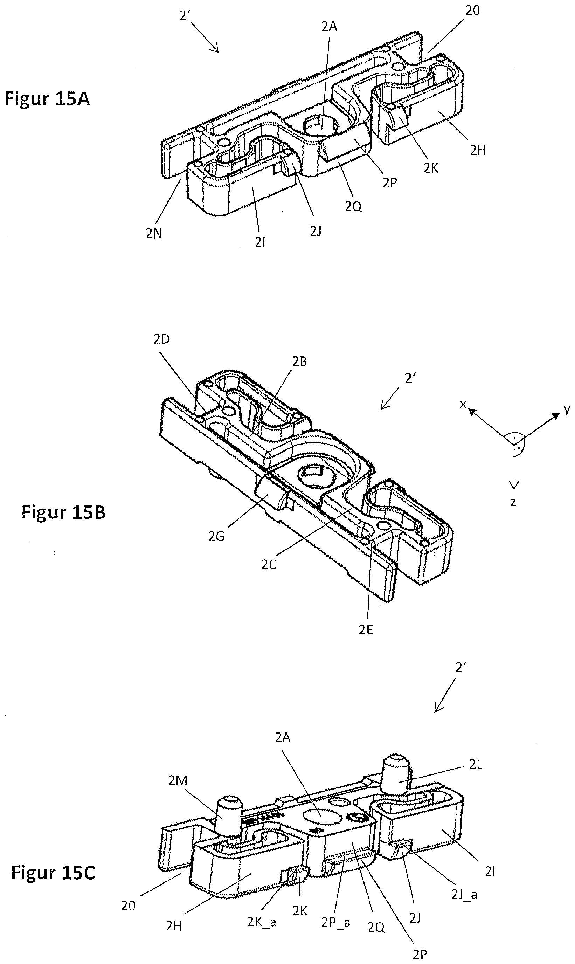

Die Figuren 15A bis 15C zeigen eine weitere Ausführungsform eines ausgebildeten Niederhalters 2', welcher im Wesentlichen identisch mit dem in den Figuren 1A bis 1C angegebenen Niederhalter aufgebaut ist. Im Folgenden wird allein auf den Unterschied zum obenstehend beschriebenen Niederhalter eingegangen. Dieser Unterschied betrifft die Gestaltung des Niederhalters außen im Bereich der Durchgangsöffnung 2A. Dabei ist im mittleren außenliegenden Bereich des Niederhalters eine weitere Außenklemmfläche 2Q ausgebildet, welche parallel zu den benachbarten Klemmflächen 2H und 2I verläuft. Darüber hinaus umfasst der abgeänderte Niederhalter 2' im Unterschied zu dem ersten Niederhalter 2 im mittleren, außenliegenden Bereich an der Außenklemmfläche 2Q eine weitere Außenrastnase 2P, die in Längsrichtung zum Niederhalter 2` fluchtend zu den benachbarten Außenrastnasen 2K bzw. 2J verläuft. Insbesondere liegen die Rastflächen 2J_a, 2K_a und 2P_a der angegebenen Außenrastnasen in einer Ebene. In Bezug auf die weitere Gestaltung des Niederhalters 2' sei vollumfänglich auf die obenstehende Beschreibung zu dem Niederhalter 2 der Figuren 1A bis 1C verwiesen, da sie zu diesem identisch ist. Insofern sind die Außenrastnasen 2K und 2J federnd ausgebildet, während die Außenrastnase 2P starr ist, da sie an einer starren Außenfläche 2Q angeordnet ist. In der dargestellten Ausführungsform beträgt die Längserstreckung der Außenrastnase 2Q mindestens das Zweifache der Längserstreckung der Außenrastnasen 2K bzw. 2J.

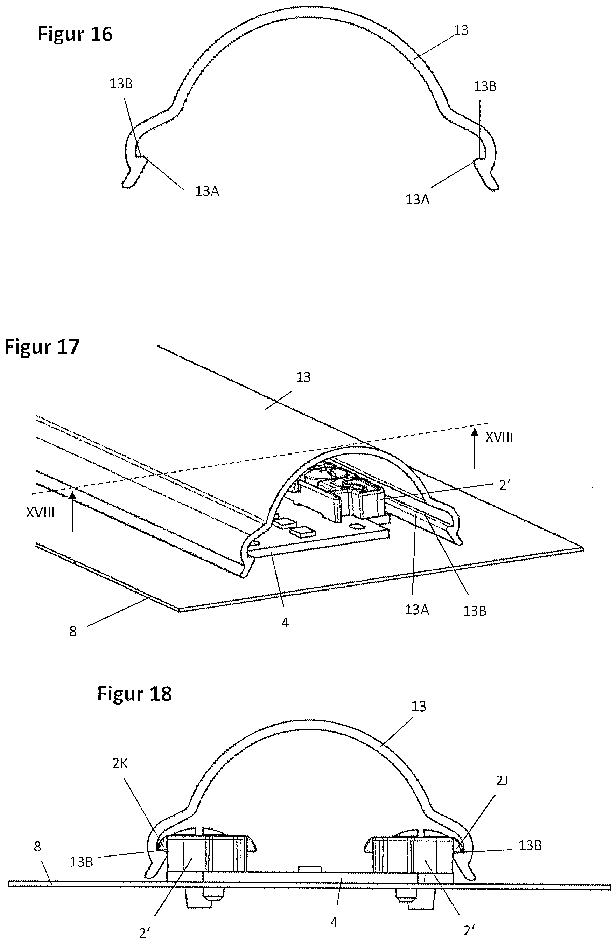

Die ausgebildeten Niederhalter 2, 2' sind mit den außenliegenden Außenklemmflächen 2H, 2I bzw. 2H, 21, 2Q und den Außenrastnasen 2J, 2K bzw. 2J, 2K und 2P ausgebildet, um an der Außenseite des Niederhalters eine Optik wie die in den Figuren 10 bis 14 angegebene Sekundäroptik, oder eine andere Optik wie eine Abdeckoptik, insbesondere einen Diffusor zu halten bzw. zu befestigen. Die in den Figuren 10 bis 14 angegebene Sekundäroptik ist in der Regel als Spritzgussteil ausgebildet, welches durch den Niederhalter an dessen Außenseite wie beschrieben gehalten wird. Die Funktionalität des Niederhalters ist jedoch darauf nicht beschränkt. Insbesondere können die beschriebenen Niederhalter 2, 2' auch zum Befestigen von Optiken, insbesondere Abdeckoptiken verwendet werden, die durch ein Extrusions- oder Strangpressverfahren hergestellt sind. Eine solche Abdeckung 13 zeigt Figur 16 in einer Stirnseitenansicht parallel zur Längsachse. Erkennbar weist die U-förmige Abdeckung im Bereich der unteren Schenkel eine als Hinterschnitt wirkende Ausbuchtung nach außen auf, derartig, dass sich über die gesamte Längserstreckung eine Absatzfläche 13B ausbildet. Deren nach innen gerichtete, abgerundete Kante bildet einen Anschlag 13A, wobei dieser Anschlag und die Absatzfläche mit den Klemmflächen 21, 2H, 2Q bzw. den Rastflächen 2J_a, 2K_a und 2P_a des Niederhalters 2 bzw. 2' zum Halten der Abdeckung zusammenwirken, worauf untenstehend noch näher eingegangen wird.

Figur 17 zeigt eine LED-Baugruppe umfassend eine langgestreckte LED-Platine 4, ein darunter angeordnetes Leuchtengehäuse 8 bzw. ein Geräteträger, wobei wie obenstehend beschrieben der Niederhalter die LED-Platine 4 auf dem Leuchtengehäuse 8 bzw. dem Geräteträger befestigt. Die in Figur 17 dargestellte LED-Baugruppe umfasst eine Abdeckoptik 13, welche die LED-Platine 4 und alle längs angeordneten Niederhalter 2` umschließt, wobei die Befestigung der hier als Diffusorabdeckung ausgebildete Abdeckoptik an dem Niederhaltern 2' nicht erkennbar ist.

Hierzu sei auf den in Figur 17 angegebenen Schnitt entlang der Linie XVIII verwiesen, siehe Figur 18, welche den Befestigungs- bzw. Einbauzustand zwischen der Abdeckoptik 13 und den Niederhaltern 2` zeigt. Im Einbauzustand greifen die Außenrastnasen 2J, 2K und 2P in den an der Innenseite der Abdeckoptik 13 längs verlaufenden Absatz ein, derartig, dass die Rastflächen 2J_a, 2K_a und 2P_a jeweils auf der Absatzfläche 13B der Abdeckung zum Liegen kommen. Darüber hinaus befindet sich die Abdeckoptik 13 an ihren Seitenschenkeln im eingebauten Zustand in einem leicht vorgespannten Zustand, derartig, dass der längsverlaufende Anschlag 13A der Abdeckoptik an die jeweiligen Klemmflächen 2H, 2Q und 2I anliegt. Die beschriebene Befestigung der Abdeckoptik an den Niederhaltern weist den Vorteil auf, dass kein Formschluss in Längsrichtung zwischen den Niederhaltern und der Abdeckung im Einbauzustand eingestellt ist, sodass eine durch Temperaturschwankungen verursachte Längenänderung der Abdeckoptik nicht zu zerstörerischen Spannungen innerhalb der Abdeckoptik führen können, da zwischen den Niederhaltern und der Abdeckoptik allein ein Kraftschluss eingestellt ist. Insofern ist die in den Figuren 17,18 gezeigte LED-Baugruppe besonders zur Gestaltung von in Längsrichtung sehr langen Leuchten geeignet.

Sowohl die Niederhalter 2 als auch die abgewandelte Niederhalter 2' sind zur Befestigung der Abdeckoptik bzw. des Diffusors 13 ausgebildet. Bei der Verwendung de Niederhalters 2' kann aufgrund der starren Außenrastnase 2P eine gegen äußere Krafteinwirkung unempfindliche Befestigung der Abdeckung 13 bereitgestellt werden.

Zum Ineingriffbringen der Abdeckoptik 13 mit den in Längsrichtung zu beiden Seitenschenkeln angeordneten und beabstandeten Niederhaltern 2', wird die Abdeckoptik 13 zunächst an einem Seitenschenkel mit den zugeordneten Außenrastnasen 2J, 2K und 2P der zugeordneten Niederhaltern über die gesamte Längserstreckung der einen Seite in Eingriff gebracht, wobei hierzu der andere Seitenschenkel der Optik aus seiner späteren Einbaulage herausgeschwenkt ist. Danach wird die Abdeckoptik 13, respektive deren freier Seitenschenkel um die befestigte Längsseite nach unten geschwenkt, wobei dieser noch nicht in Eingriff gebrachte Seitenschenkel aufgrund der Elastizität des Materials etwas nach außen gebogen wird, bis sich auch der zweite Seitenschenkel in seiner vertikalen Endposition befindet. Danach kann die auf den zweiten Schenkel aufgebrachte, und nach außen gerichtete Kraft aufgehoben werden. Damit gerät auch der zweite Seitenschenkel der Abdeckoptik 13 in Eingriff mit dem komplementären Befestigungsmittel an den zugeordneten Niederhaltern 2', derart, dass der Anschlag 13A gegen die Klemmflächen 2H, 2Q und 2I stößt, sowie die Absatzflächen 2B der Abdeckoptik 13 an den zugeordneten Rastflächen 2J_a, 2K_a und 2P_a zum Liegen kommt.

Zum Ineingriffbringen der Abdeckoptik 13 mit den Niederhaltern 2' kann die Abdeckung andererseits auch horizontal ausgerichtet zur LED-Platine vertikal nach unten bewegt werden, wodurch beide Seitenschenkel durch die Auflage auf den Niederhaltern federnd nach außen gedrückt werden, wodurch die Außenrastnasen 2J, 2K und 2P der Niederhalter 2' in die Hinterschneidung zu liegen kommen und beide Seitenschenkel der Abdeckung 13 wieder zurückschnappen.

Die Optiken können erfindungsgemäß auch ein- oder mehrteilig ausgebildet sein.

Der Gegenstand der vorliegenden Erfindung ergibt sich nicht nur aus dem Gegenstand der einzelnen Patentansprüche, sondern aus der Kombination der einzelnen Patentansprüche untereinander.

### Bezugszeichenliste

- 2, 2': Niederhalter
- 2A: Durchgangsöffnung
- 2B: Längsarm
- 2C: Längsarm
- 2D: Querarm
- 2E: Querarm
- 2F: Innenklemmfläche
- 2G: Innenrastnase
- 2H: Außenklemmfläche
- 2I: Außenklemmfläche
- 2J: Außenrastnase
- 2J_a: Rastfläche
- 2K: Außenrastnase
- 2K_a: Rastfläche
- 2L: Stift
- 2M: Stift
- 2N: Stirnöffnung
- 2O: Stirnöffnung
- 2P: Außenrastnase
- 2P_a: Rastfläche
- 2Q: Außenklemmfläche
- 4: LED-Platine
- 6: Befestigungsschraube
- 8: Leuchtengehäuse
- 10: Primäroptik
- 10A: Außenlasche
- 10B: Außenlasche
- 10C: Eingriffhaken
- 10D: Eingriffhaken
- 10E: Rastnasenplateau
- 12: Sekundäroptik
- 12A: Rastloch
- 12B: Rastloch
- 12C: Zentrierwinkel
- 12D: Zentrierwinkel
- 13: Abdeckoptik, Diffusor
- 13A: Anschlag
- 13B: Absatzfläche

## Patentansprüche

1. LED-Baugruppe umfassend eine LED-Platine (4) mit mehreren in Einbaulage darauf fixierten und beabstandet zueinander angeordneten Niederhaltern (2), die in Einbaulage mittels eines Befestigungsmittels an einem der LED-Baugruppe zugehörenden Fügepartner, z. B. einem Leuchtengehäuse (8) oder einem Geräteträger, befestigt sind und mit einer Niederhaltefläche versehen sind, welche aufgrund einer durch das Befestigungsmittel in Einbaulage aufgebrachten Anpresskraft die LED-Platine (4) in Einbaulage gegen den Fügepartner presst, wobei die LED-Baugruppe ferner eine die LED-Platine (4) in Einbaulage überbrückende Optik umfasst, **DADURCH GEKENNZEICHNET, DASS** die Niederhalter (2) zusätzliche Fixiermittel zum Fixieren der Optik aufweisen, welche ohne Änderung der Anpresskraft und ohne Lösen der Niederhaltefläche betätigbar sind.

2. LED-Baugruppe nach Anspruch 1, **DADURCH GEKENNZEICHNET, DASS** die Niederhalter (2) jeweils Positioniermittel für eine ortsgenaue Positionierung in Einbaulage aufweisen.

3. LED-Baugruppe nach einem der vorhergehenden Ansprüche, **DADURCH GEKENNZEICHNET, DASS** die Niederhalter (2) jeweils Lagefixiermittel aufweisen.

4. LED-Baugruppe nach einem der vorhergehenden Ansprüche, **DADURCH GEKENNZEICHNET, DASS** die Fixiermittel getrennte Fixierelemente zur unabhängigen Befestigung von verschiedenen Klemmbauteilen umfasst.

5. LED-Baugruppe) nach Anspruch 4, **DADURCH GEKENNZEICHNET, DASS** die Fixierelemente Klemmflächen (2F, 2H, 2I) umfassen, welche von der Niederhaltefläche unterschiedlich sind.

6. LED-Baugruppe nach Anspruch 5, **DADURCH GEKENNZEICHNET, DASS** sich die Klemmflächen (2F, 2H, 21, 2Q) im Wesentlichen quer zur Niederhaltefläche erstrecken.

7. LED-Baugruppe nach Anspruch 5 oder 6, **DADURCH GEKENNZEICHNET, DASS** das Verhältnis der Klemmflächen (2F, 2H, 2I, 2Q) zur Niederhaltefläche im Bereich von 1,2 bis 1,5 liegt.

8. LED-Baugruppe nach einem der vorhergehenden Ansprüche, **DADURCH GEKENNZEICHNET, DASS** die Klemmflächen unterschiedliche Elastizitäten aufweisen.

9. LED-Baugruppe nach einem der vorhergehenden Ansprüche, **DADURCH GEKENNZEICHNET, DASS** die Niederhalter (2) jeweils Anschlussklemmen umfassen.

10. LED-Baugruppe nach einem der vorhergehenden Ansprüche, **DADURCH GEKENNZEICHNET, DASS** die Niederhalter (2) jeweils einen Kommunikationsanschluss umfassen.

11. LED-Baugruppe nach einem der vorangehenden Ansprüche, **DADURCH GEKENNZEICHNET, DASS** die Optik als Primäroptik ausgebildet ist, welche in Einbaulage von einer Sekundäroptik (12) überbrückt ist.

12. LED-Baugruppe nach Anspruch 11, **DADURCH GEKENNZEICHNET, DASS** die Primäroptik (10) an einer Innenklemmfläche (2F) des Niederhalters (2) lösbar befestigbar ist und die Sekundäroptik (12) an einer Außenklemmfläche (2H,2I) des Niederhalters (2) lösbar befestigbar ist.

13. LED-Baugruppe nach einem der vorangehenden Ansprüche, **DADURCH GEKENNZEICHNET, DASS** die Optik als Abdeckoptik (13) ausgebildet ist, wobei die Abdeckoptik senkrecht zur Längsrichtung einen U-förmigen Querschnitt aufweist, und wobei im Bereich der beiden freien Enden die Seitenschenkel der U-Form jeweils eine nach außen verlaufende Ausbuchtung angeordnet ist zur Gestaltung einer als Anlage für außenliegende Rastnasen (2J, 2K, 2P) des Niederhalter wirkende Absatzfläche (13B).

14. LED-Baugruppe nach Anspruch 13, **DADURCH GEKENNZEICHNET, DASS** in Einbaulage der Abdeckoptik (13) eine rein kraftschlüssige Verbindung zwischen Abdeckoptik und Niederhaltern (2, 2') ausgebildet ist.

## Claims

1. LED module comprising a LED board (4) with several hold-down devices (2) fixed thereon in mounting position and placed spaced from each other that are fixed in mounting position by means of a fixing means to a mating part belonging to the LED module, for example a luminaire housing (8) or a gear tray and with a holding-down surface that presses the LED board (4) in mounting position against the mating part due to a pressing force applied by the fixing means in mounting position, wherein the LED module further comprises an optics that spans the LED board (4) in mounting position, **characterized in that** the hold-down devices (2) have additional fixing means for fixing the optics that can be actuated without modifying the pressing force and without loosening the holding-down surface.

2. LED module according to claim 1, **characterized in that** the hold-down devices (2) each comprise positioning means for a precise positioning in mounting position.

3. LED module according to one of the preceding claims, **characterized in that** the hold-down devices (2) each comprise positional fixing means.

4. LED module according to one of the preceding claims, **characterized in that** the fixing means comprise separate fixing elements for the independent fixing of various clamping members.

5. LED module according to claim 4, **characterized in that** the fixing means comprise clamping surfaces (2F, 2H, 21) that are distinct from the holding-down surface.

6. LED module according to claim 5, **characterized in that** the clamping surfaces (2F, 2H, 21, 2Ω) extend substantially transversely to the holding-down surface.

7. LED module according to claim 5 or 6, **characterized in that** the ratio of the clamping surfaces (2F, 2H, 21, 2Ω) to the holding-down surface is in the range of 1,2 to 1,5.

8. LED module according to one of the preceding claims, **characterized in that** the clamping surfaces have different elasticities.

9. LED module according to one of the preceding claims, **characterized in that** the hold-down devices (2) each comprise terminals.

10. LED module according to one of the preceding claims, **characterized in that** the hold-down devices (2) each comprise a communication connection.

11. LED module according to one of the preceding claims, **characterized in that** the optics is configured as primary optics which is spanned in mounting position by a secondary optics (12).

12. LED module according to claim 11, **characterized in that** the primary optics (10) can be removably fixed to an inner clamping surface (2F) of the hold-down device (2) and the secondary optics (12) can be removably fixed to an outer clamping surface (2H, 21) of the hold-down device (2).

13. LED module according to one of the preceding claims, **characterized in that** the optics is configured as covering optics (13), wherein the covering optics has a U-shaped cross-section perpendicularly to the longitudinal direction and wherein an outwards extending bulge is placed in the region of both free ends of each of the side legs of the U-shape for configuring a shoulder surface (13B) acting as a bearing surface for external detent lugs (2J, 2K, 2P) of the hold-down device.

14. LED module according to claim 13, **characterized in that** a purely force-fit connection is configured between the covering optics and the hold-down devices (2, 2') in mounting position of the covering optics (13).

## Revendications

1. Ensemble LED comprenant une platine LED (4) avec plusieurs éléments de maintien en place vers le bas (2), qui y sont fixés en position de montage et qui sont placés espacés l'un de l'autre et qui sont fixés, en position de montage, au moyen d'un moyen de fixation à une pièce à assembler qui fait partie de l'ensemble LED, par exemple un boîtier de luminaire (8) ou une platine appareillage et qui sont pourvus d'une surface de maintien en place vers le bas qui, en raison d'une force de pression appliquée par le moyen de fixation en position de montage, presse la platine LED (4) en position de montage contre la pièce à assembler, cependant que l'ensemble LED comprend de plus une optique qui surmonte la platine LED (4) en position de montage, **caractérisé en ce que** les éléments de maintien en place vers le bas (2) présentent des moyens de fixation supplémentaires pour fixer l'optique qui peuvent être actionnés sans modifier la force de pression et sans desserrer la surface de maintien en place vers le bas.

2. Ensemble LED selon la revendication 1, **caractérisé en ce que** les éléments de maintien en place vers le bas (2) présentent chacun des moyens de positionnement pour un positionnement à un endroit précis en position de montage.

3. Ensemble LED selon l'une des revendications précédentes, **caractérisé en ce que** les éléments de maintien en place vers le bas (2) présentent chacun des moyens de fixation en position.

4. Ensemble LED selon l'une des revendications précédentes, **caractérisé en ce que** les moyens de fixation comprennent des éléments de fixation séparés pour la fixation indépendante de différents éléments de serrage.

5. Ensemble LED selon la revendication 4, **caractérisé en ce que** les éléments de fixation comprennent des surfaces de serrage (2F, 2H, 21) qui diffèrent de la surface de maintien en place vers le bas.

6. Ensemble LED selon la revendication 5, **caractérisé en ce que** les surfaces de serrage (2F, 2H, 21, 2Ω) s'étendent sensiblement perpendiculairement à la surface de maintien en place vers le bas.

7. Ensemble LED selon la revendication 5 ou 6, **caractérisé en ce que** le rapport des surfaces de serrage (2F, 2H, 21, 2Ω) et de la surface de maintien en place vers le bas est de l'ordre de 1,2 à 1,5.

8. Ensemble LED selon l'une des revendications précédentes, **caractérisé en ce que** les surfaces de serrage présentent différentes élasticités.

9. Ensemble LED selon l'une des revendications précédentes, **caractérisé en ce que** les éléments de maintien en place vers le bas (2) comprennent chacun des bornes de raccordement.

10. Ensemble LED selon l'une des revendications précédentes, **caractérisé en ce que** les éléments de maintien en place vers le bas (2) comprennent chacun un raccord de communication.

11. Ensemble LED selon l'une des revendications précédentes, **caractérisé en ce que** l'optique est configurée comme optique primaire qui est surmontée, en position de montage, par une optique secondaire (12).

12. Ensemble LED selon la revendication 11, **caractérisé en ce que** l'optique primaire (10) peut être fixée de manière amovible à une surface de serrage intérieure (2F) de l'élément de maintien en place vers le bas (2) et l'optique secondaire (12) peut être fixée de manière amovible à une surface de serrage (2H, 2 I) de l'élément de maintien en place vers le bas (2).

13. Ensemble LED selon l'une des revendications précédentes, **caractérisé en ce que** l'optique est configurée comme une optique de recouvrement (13), cependant que l'optique de recouvrement présente une section transversale en forme de U perpendiculairement à la direction longitudinale et cependant qu'il est placé, dans la zone des deux extrémités libres de chacun des montants latéraux de la forme en U, un renflement qui s'étend vers l'extérieur pour former une surface en gradin (13B) qui agit comme un appui pour des ergots d'encliquetage situés à l'extérieur (2J, 2K, 2P) de l'élément de maintien en place vers le bas.

14. Ensemble LED selon la revendication 13, **caractérisé en ce qu'**une liaison purement de force est configurée, en position de montage de l'optique de recouvrement (13), entre l'optique de recouvrement et des éléments de maintien en place vers le bas (2, 2').
